# EUROPEAN PATENT SPECIFICATION

(11) **EP 3 640 162 B1**
(45) Date of publication and mention of the grant of the patent: **03.03.2021**
(21) Application number: 19200744.1
(22) Date of filing: 01.10.2019
(51) Int. Cl.: B65G 15/62, B65G 39/09, B65G 47/66

(54) **RETURN GUIDING DEVICE FOR CONVEYOR BELTS**
RÜCKLAUFFÜHRUNGSVORRICHTUNG FÜR FÖRDERBÄNDER
DISPOSITIF DE GUIDAGE DE RETOUR POUR COURROIES DE CONVOYEUR

(30) Priority: 16.10.2018 IT 201800009501
(43) Date of publication of application: 22.04.2020
(73) Proprietor: Movex S.p.A., 24060 Castelli Calepio (BG) (IT)
(72) Inventor: MARSETTI, Matteo, 24060 TELGATE (BG) (IT); MARSETTI, Sergio, 6099 PARADISO (CH)
(74) Representative: Ottazzo, Marco Francesco Agostino

(56) References cited:
- EP-A1- 2 289 822
- DE-U1-202006 020 227
- DE-U1-202006 020 227
- US-A1- 2014 034 457

## Description

The present invention relates in general to bulk goods conveyors provided with conveyor belts and, in particular, to a return guiding device for a conveyor belt.

As known, a bulk goods conveyor defines a movement surface for generic goods to be conveyed. Such a conveyor is generally provided with one or several movable and flexible conveyor belts. Each conveyor belt is in turn formed of a plurality of modules connected to each other to form a closed ring which at least partially slides on a support structure, which defines a rectilinear or curvilinear feeding direction of the movement surface.

At the ends of each support structure there are positioned respective return guiding devices for the conveyor belt. These devices, also referred to as nose bars, make it possible for the conveyor belt to move away from the support structure at one of its ends, as well as to come back onto the support structure at its opposed end.

A generic return guiding device of a known type can be merely formed of a plate having a rounded edge placed at one end of the support structure. The portion of the conveyor belt which does not rest on the support structure falls down, because of its own weight, beyond the rounded edge of the plate and places itself between the two return guiding devices, below the support structure, along a catenary curve.

While driven into movement by a motor provided for this purpose, the conveyor belt goes up the support structure at a return guiding device, then it moves forward on its respective movement surface up to running into the opposed return guiding device. Then, the conveyor belt intercepts a respective return guiding device and hits and scrapes it, both when going up the support structure and when going down such support structure. In particular, when the conveyor belt goes up the support structure, its component modules hit the return guiding device and cause a non-negligible collision.

In order to reduce the frictions of the conveyor belt with the return guiding device, the rounded edge of the plate that forms such return guiding device can be provided with one or several protruding rollers or rolling bearings, having their respective axes of rotation substantially perpendicular to the forward movement direction of the conveyor belt. The axis of rotation of these rollers or rolling bearings is usually defined by one single pin inserted into a corresponding hole obtained at the rounded edge of the plate that forms the return guiding device.

A return guiding device according to the preamble of claim 1, is disclosed in document DE 20 2006 020227 U1. In the return guiding devices of the prior art, the hole for the pin of the rollers or rolling bearings is obtained by way of a perforation, by usually using a drill which pierces, from side to side, the side surfaces of the rounded edge of the plate that forms the return guiding device. However, this procedure for obtaining such hole does not provide any warranty that the hole itself is always rectilinear and/or perfectly perpendicular to the forward movement direction of the conveyor belt. Also, the hole for the pin of the rollers or rolling bearings is in any case difficult to implement with the requested accuracy, especially on particularly wide plates and/or plates that require numerous rollers or rolling bearings. A non-perfect alignment of the hole for the pin of the rollers or rolling bearings might result in an even small flexure of its respective pin, which could consequently make the rotation of the rollers or rolling bearings difficult.

In addition, there is a maximum limit of width for the plates where the hole can be obtained by way of a perforation. This maximum limit of width is bound to the standard dimensions of the usual driller tips, which do not have a sufficient length to perforate remarkably wide plates from side to side. As a matter of fact, special, very long tips would be necessary for these plates and consequently the problem related to the non-rectilinearity of the hole could be even more apparent for them.

Another problem encountered in this procedure of obtaining the hole is related to a complicated assembling of the pin and its respective rollers or rolling bearings. As a matter of fact, it is necessary to insert the pin at one end of the hole first and then to insert each roller or rolling bearing in its respective seat, one at time, while the pin progressively goes down inside the hole to intercept the already assembled rollers or rolling bearings.

An object of the present invention is thus to provide a return guiding device for a conveyor belt that is capable of solving the above-mentioned drawbacks of the prior art in an extremely simple, cost-effective, and particularly functional manner.

In details, an object of the present invention is to provide a return guiding device for a conveyor belt that is provided with an axis of rotation of the rollers or rolling bearings that is perfectly rectilinear and perpendicular to the direction of forward movement of the conveyor belt.

Another object of the present invention is to provide a return guiding device for a conveyor belt wherein the assembling procedure used to assemble its respective rollers or rolling bearings, as well as to disassemble them, if any, is easier than that of similar devices of the prior art.

A further object of the present invention is to provide a return guiding device for a conveyor belt wherein there are no at least virtual limits to the overall width of such return guiding device.

These objects according to the present invention are achieved by the return guiding device for a conveyor belt as set forth in claim 1.

Further features of the invention are highlighted in the dependent claims, which form an integral part of the present disclosure.

The features and advantages of a return guiding device for a conveyor belt according to the present invention will be more apparent from the following exemplary, non-limitative description, which makes reference to the schematic drawings attached hereto, wherein:
figure 1 is a perspective view of a first embodiment of a return guiding device for a conveyor belt according to the present invention;
figure 2 is a perspective view of a second embodiment of a return guiding device for a conveyor belt according to the present invention;
figure 3 is a perspective view of a return guiding device for a conveyor belt according to the present invention, shown in a preliminary manufacturing step;
figure 4 is a partially sectioned top view of the return guiding device of figure 2;
figure 5 is a partially transparent top view of the return guiding device of figure 1;
figure 6 is a cross-sectional view of the return guiding device of figure 1, along the line VI-VI in figure 5;
figure 7 is a detailed view of the detail identified by VII in figure 6;
figure 8 shows an assembling step of the return guiding device of figure 1;
figure 9 shows an assembling step of the return guiding device of figure 2;
figures 10 and 11 are transparent views of the return guiding device of figure 1, shown in an assembled configuration; and
figures 12 and 13 are transparent views of the return guiding device of figure 2, shown in an assembled configuration.

With reference to the figures, they show two preferred embodiments of the return guiding device for a conveyor belt according to the present invention. The return guiding device for a conveyor belt is identified as a whole by the reference number 10. The device 10 is configured for being used in a generic conveying line (not shown) for guiding and supporting the return movement of a generic conveyor, typically a conveyor belt, but also a conveying chain that is movable along a direction of forward movement predefined in such conveying line, if any.

The device 10 basically comprises at least one plate-like body 12 designed for being positioned at one end of the conveying line, in particular at one end of the support structure of the conveyor belt, and for being aligned with the conveyor belt. The plate-like body 12 comprises a pair of opposed side surfaces 14, 16, which form the sides or shoulders of the device 10 and on which no contact takes place between such device 10 and the conveyor belt.

The plate-like body 12 also comprises an upper surface 18 and a lower surface, opposed to each other, which are substantially orthogonal to the pair of side surfaces 14, 16. During its own forward path on its respective support structure, the conveyor belt slides on the upper surface 18 of the plate-like body 12 and is subsequently diverted by the device 10 onto its own return path, which starts below the lower surface of the plate-like body 12.

A rounded front surface 20 is interposed between the upper surface 18 and the lower surface of the plate-like body 12 and interconnects the upper surface 18 with the lower surface. This rounded front surface 20 and at least the upper surface 18 of the plate-like body 12 define respective surfaces on which the conveyor belt runs in its passage from its own forward path to its own return path.

On the rounded front surface 20 of the plate-like body 12 there is provided at least one rolling body 22, 24, protruding from the rounded front surface 20 and freely rotatable about at least one pin 26 inserted in at least one respective seat 28 obtained at the rounded front surface 20. Both the pin 26 and its respective seat 28 are oriented along one and the same axis of rotation A which is substantially parallel to the upper surface 18 and to the lower surface of the plate-like body 12. The axis A of the pin 26 and of its respective seat 28 is consequently substantially perpendicular to the two opposed side surfaces 14, 16 of the plate-like body 12.

Each rolling body 22, 24 is mounted idle on its own respective pin 26. Each rolling body 22, 24 is driven into rotation by the conveyor belt sliding on the rounded front surface 20 of the plate-like body 12. Therefore, the function of the rolling bodies 22, 24 is to reduce the frictions of the conveyor belt with respect to the device 10, in particular during the change of direction from the forward path to the return path.

According to the invention, the plate-like body 12 consists of a single piece made of a plastic material, whereas the seat 28 of the pin 26 is obtained by way of a milling operation on the rounded front surface 20 of such plate-like body 12. The seat 28 of the pin 26, instead of being formed of a through hole as with the devices according to the prior art, is conversely formed of a frontally open substantially U-shaped channel. This channel 28 has a width L1, as measured in the direction of its own axis A, that is smaller than the overall width L2 of the upper surface 18, of the lower surface, and of the rounded front surface 20 of the plate-like body 12. In this way, the channel 28 is laterally closed by the two opposed side surfaces 14, 16. In other words, the channel 28 does not cross the two opposed side surfaces 14, 16, which conversely remain solid, intact, and continuous to form two corresponding reinforcing shoulders for the plate-like body 12 of the device 10.

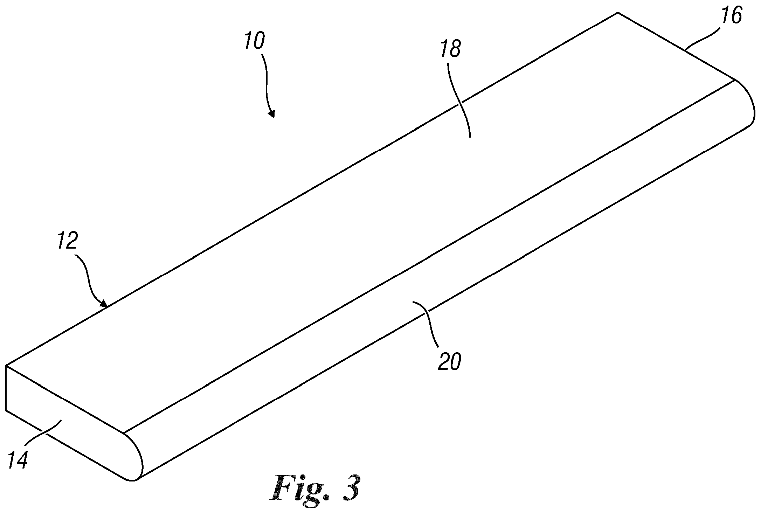

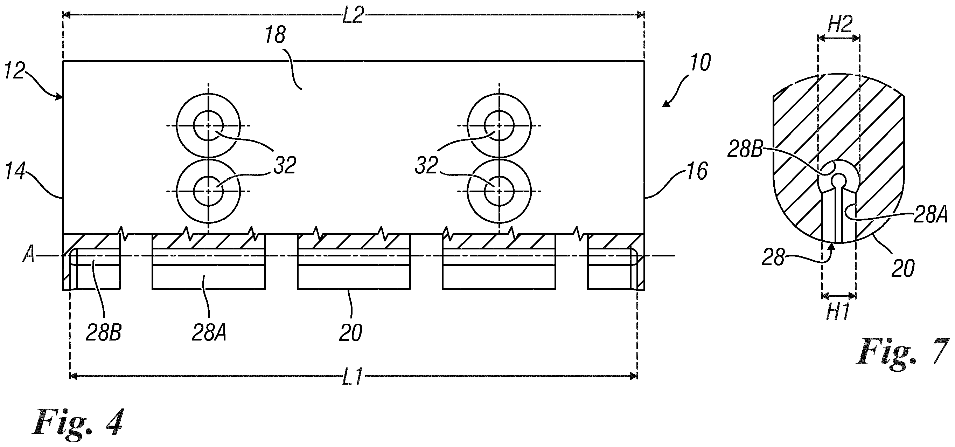

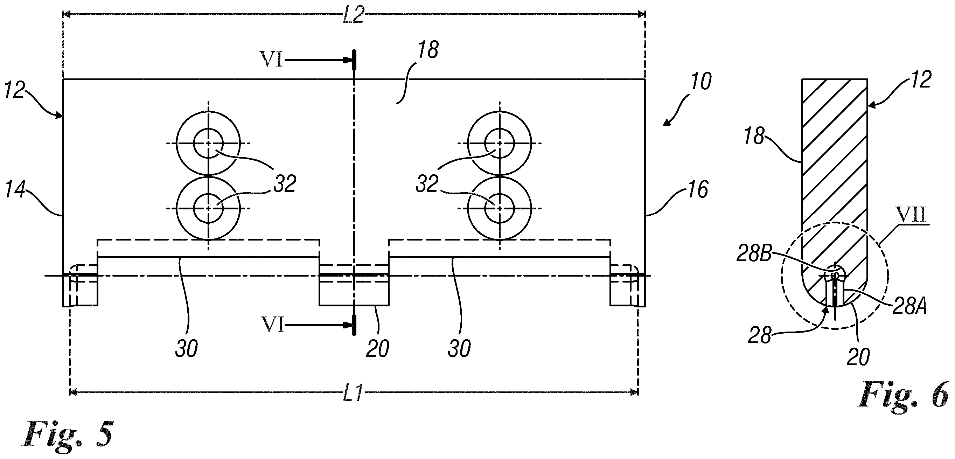

Preferably, as shown in figure 3, the single piece made of a plastic material that forms the plate-like body 12 of the device 10 can be manufactured by way of an extrusion process or by way of a molding process. Still preferably, with reference in particular to figures 6 and 7, the channel 28 is sequentially formed of a first channel portion 28A, which is open on the rounded front surface 20 of the plate-like body 12 and forms an insertion portion for the pin 26 during the assembling step of the device 10, and a second channel portion 28B, which forms the blind bottom of the channel 28 and holds the pin 26 in an assembled configuration of the device 10. The second channel portion 28B features a substantially circular cross-section and has a height or diameter H2, as measured along a direction perpendicular to the axis A of the channel 28, that is smaller than the height H1 of the first channel portion 28A.

The pin 26 also features a substantially circular cross-section. Also, the overall thickness or diameter D of the pin 26 is smaller than the height H1 of the first channel portion 28A and substantially equals the height or diameter H2 of the second channel portion 28B.

Therefore, during the assembling step of the device 10, the pin 26 is initially inserted through the first channel portion 28A by interference, by taking advantage of the relative deformability of the plastic material that the plate-like body 12 of the device 10 is made of. Then, the pin 26 snap enters the second channel portion 28B, as better specified below.

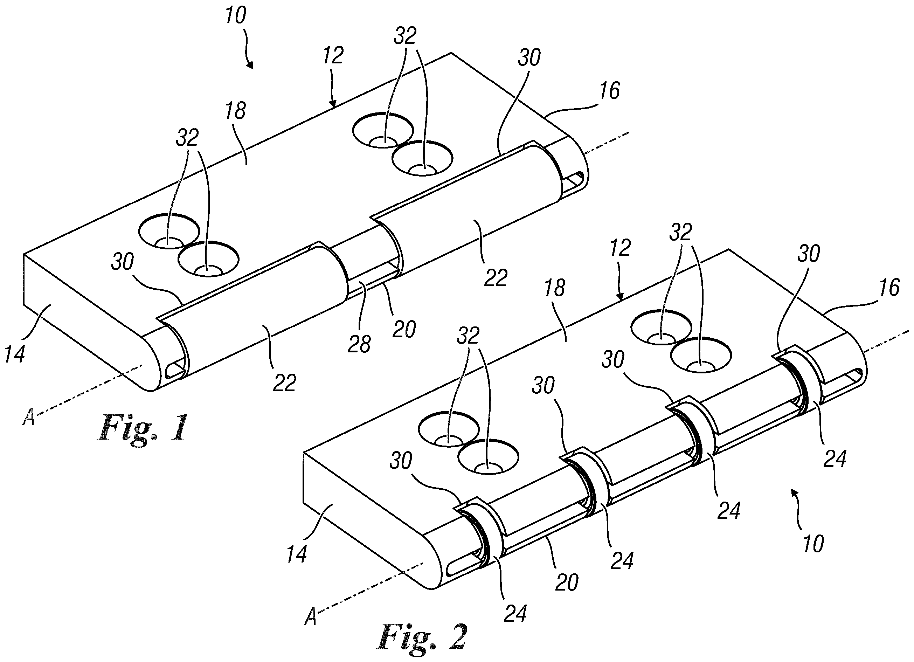

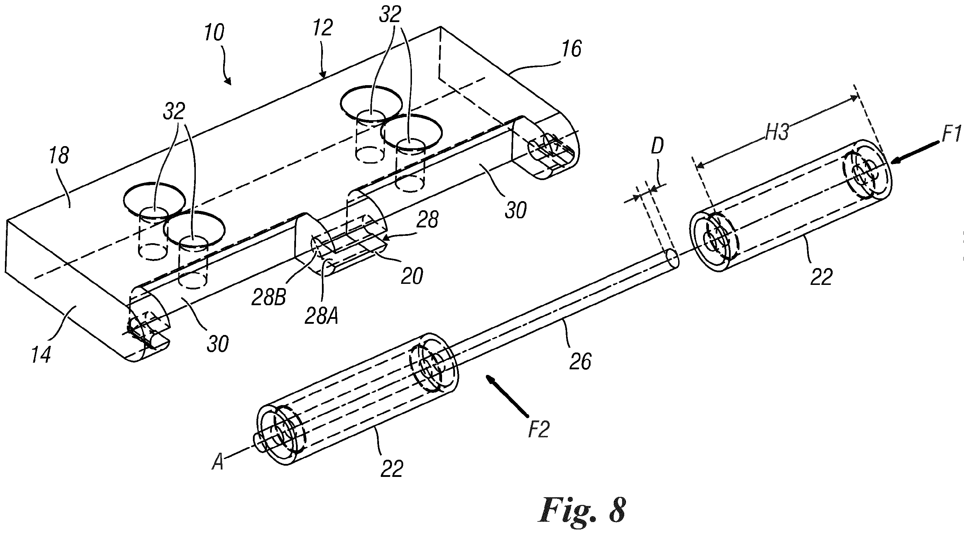

Preferably, each rolling body 22, 24 is formed of a cylinder with circular bases, whose height H3, H4 lies along the axis A of the pin 26 and of its respective seat 28. With reference to the first embodiment of the device 10, shown in figure 1, the cylinder with circular bases that forms each rolling body 22 has a height H3 (figure 8) that is substantially greater than its own radius. Therefore, one or several cylinders 22 can be arranged in the form of rollers on the device 10 and occupy a surface area preferably greater than 50 % of the rounded front surface 20 of the plate-like body 12.

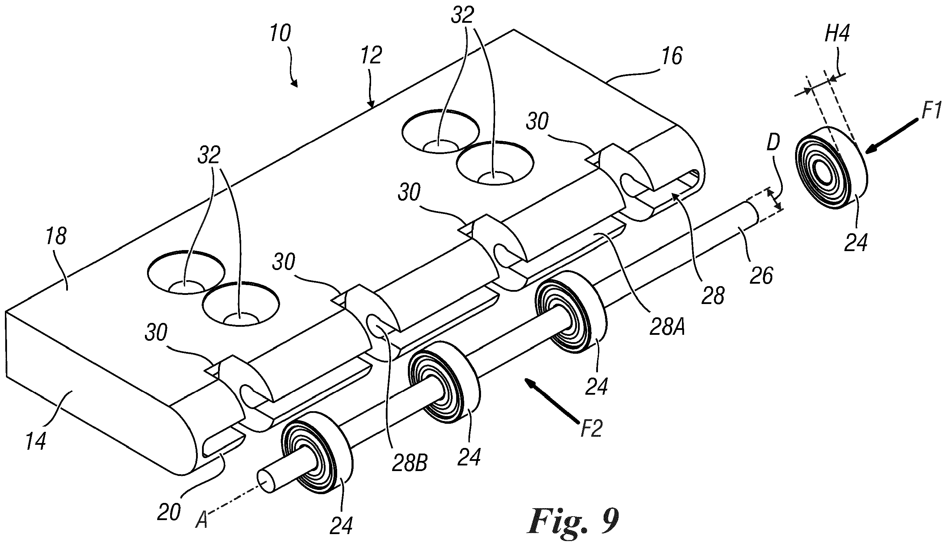

Conversely, with reference to the second embodiment of the device 10, shown in figure 2, the cylinder with circular bases that forms each rolling body 24 has a height H4 (figure 9) that is substantially smaller than its own radius. Therefore, a plurality of cylinders 24 can be provided, for example, on the device 10, in the form of rolling bearings of the ball bearing type, reciprocally spaced away by portions of the rounded front surface 20 of the plate-like body 12.

Irrespective of the actual embodiment, each rolling body 22, 24 is inserted into a corresponding housing 30 obtained in the plate-like body 12 at the rounded front surface 20 by way of a milling operation. Each housing 30 is consequently aligned along the same axis A of the pin 26 and of its respective channel 28, thus breaking the continuity of such channel 28 along the axis A. In other words, with reference to the embodiments shown in the figures, the channel 28 is made up of at least two sections of the channel 28 aligned along the axis A and spaced away by at least one housing 30.

The plate-like body 12 can then be provided with one or several holes 32, preferably having a respective axis that is substantially perpendicular to the axis A of the pin 26 and of its respective seat 28, configured for securing the device 10 to the support structure of the conveyor belt. Therefore, the device 10 can be secured to the support structure of the conveyor belt by using fixing means of a known type.

The method described so far for manufacturing and assembling the device 10 can be summarized as follows. First of all, an item consisting of a single piece made of a plastic material, preferably manufactured by way of an extrusion process or by way of a molding process is prepared.

The single piece of plastic material is typically manufactured to a standard width, for example a width equal to 2 mt, and is subsequently cut to size in such a way as to obtain a plate-like body 12 having a predefined width L2, variable as a function of its corresponding width of the conveyor belt and its respective support structure. Then, the two opposed side surfaces 14, 16 are obtained on the plate-like body 12, in such a way as to make them substantially orthogonal to the opposed upper surface 18 and lower surface, as well as the rounded front surface 20 interconnecting the upper surface 18 and the lower surface.

Then, one or several housings 30 are obtained on the rounded front surface 20 of the plate-like body 12 by way of a milling operation, so that each housing 30 is configured for inserting a respective rolling body 22, 24 therein. Then, a similar milling operation is carried out to obtain the seat 28 configured for inserting the pin 26 therein, still on the rounded front surface 20 of the plate-like body 12. As described above, the seat 28 consists of a frontally open substantially U-shaped channel having a width L1 which is smaller than the predefined width L2 of the plate-like body 12, so that the channel 28 is laterally closed by the opposed side surfaces 14, 16 of the plate-like body 12 itself.

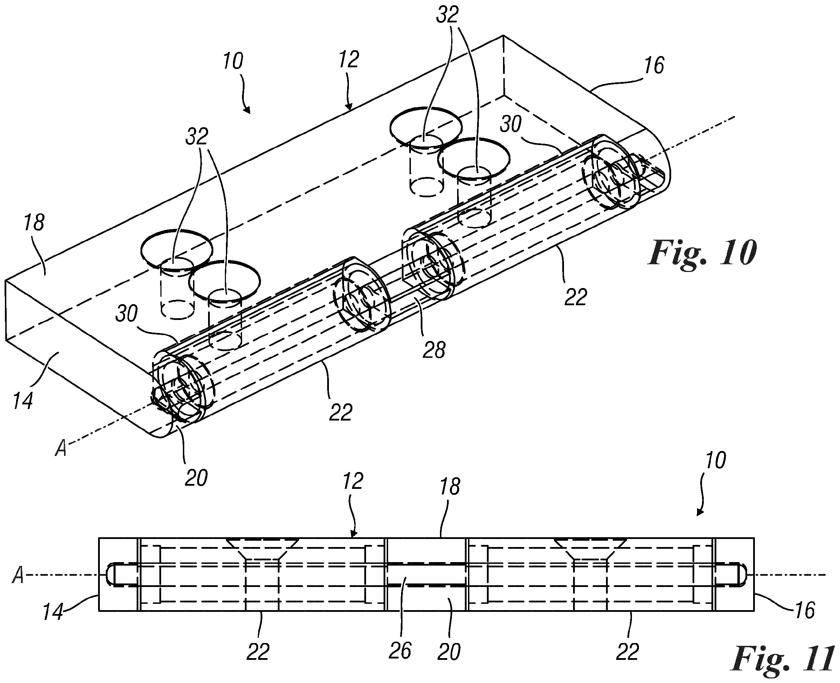

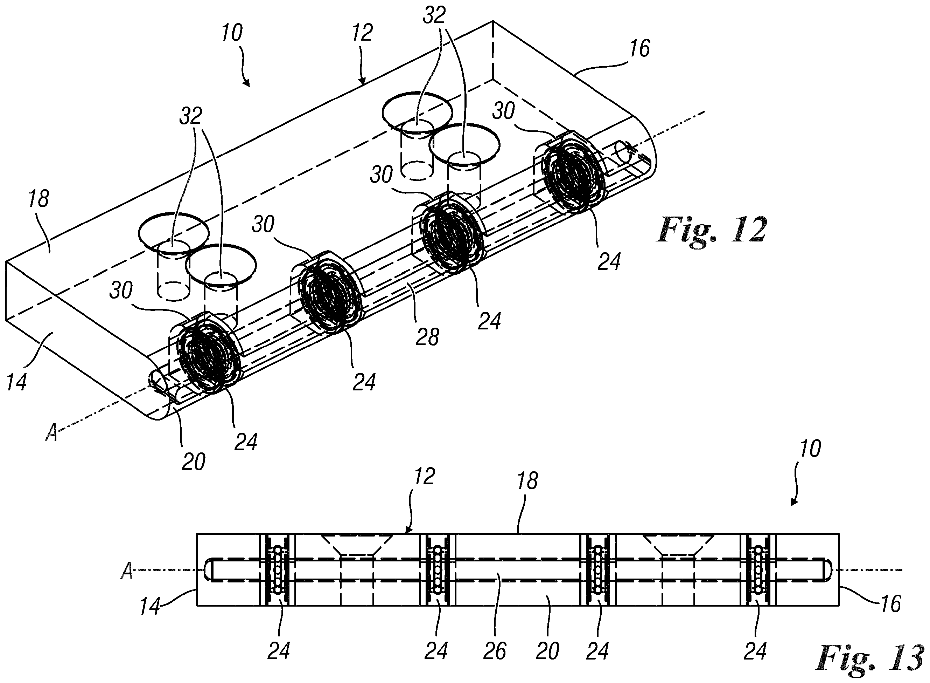

Then, the method for manufacturing and assembling the device 10 ends with the embedding of the pin 26 (along the direction indicated by the arrow F2 in figures 8 and 9), about which all respective rolling bodies 22, 24 have already been previously inserted (along the direction indicated by the arrow F1 in figures 8 and 9), internally to its respective channel 28. In this way, an assembled configuration of the device 10 is obtained, as transparently shown in figures 10-13.

The pin 26 and its respective rolling bodies 22, 24 can be conveniently made of a metal material, preferably steel. The presence of solid, intact, and continuous side surfaces 14, 16 makes it possible to center both the pin 26 inside its respective channel 28, and the rolling bodies 22, 24 inside their respective housings 30, irrespective of the length of such pin 26 and of the number of rolling bodies 22, 24 inserted therein.

It has been thus demonstrated that the return guiding device for a conveyor belt according to the present invention achieves the previously highlighted objects. The milling operation for obtaining the seat of the pin can be made on plate-like bodies of any widths, without experiencing the misalignment problem that affects similar return guiding devices provided with holes obtained by way of perforation. In addition, this milling operation makes it possible to apply rollers and/or bearings of any widths and in any quantities to the return guiding device. Finally, in addition to the insertion operations, also pin and their respective rollers and/or bearings disassembling operations, if any, (for example, in order to perform cleaning activities), are simpler than with similar return guiding devices provided with holes obtained by way of perforation, in that the set formed of a pin and its respective rollers and/or bearings never needs for being disassembled.

## Claims

1. A guiding device (10) for one end of a conveying line, the device (10) being configured for guiding and supporting the return movement of a conveyor, the device (10) comprising at least one plate-like body (12) designed for being positioned at said end of the conveying line and for being aligned with the conveyor, said plate-like body (12) comprising:
- a pair of opposed side surfaces (14, 16);
- an upper surface (18) and a lower surface opposed to each other, which are substantially orthogonal to said pair of side surfaces (14, 16);
- a rounded front surface (20), which connects said upper surface (18) to said lower surface, said rounded front surface (20) and at least said upper surface (18) defining respective sliding surfaces for said conveyor; and
- at least one rolling body (22, 24), protruding from the rounded front surface (20) and freely rotatable about at least one pin (26) engaged in at least one respective seat (28) obtained at said rounded front surface (20),
wherein said pin (26) and said seat (28) are oriented along one and the same axis (A) which is substantially parallel to said upper surface (18) and lower surface, opposed to each other, and which is substantially perpendicular to said pair of opposed side surfaces (14, 16), and wherein the rotation of said at least one rolling body (22, 24) is caused by the sliding of said conveyor on said rounded front surface (20), the device (10) being **characterized in that** said plate-like body (12) consists of a single piece of plastic material, wherein said seat (28) is obtained by a milling operation on said rounded front surface (20), said seat (28) consisting of a substantially U-shaped channel which is frontally open and having a width (L1), as measured in the direction of said axis (A), that is smaller than the overall width (L2) of said upper surface (18), said lower surface and said rounded front surface (20), so that said channel (28) is laterally closed by said pair of opposed side surfaces (14, 16).

2. The device (10) according to claim 1, **characterized in that** said channel (28) is sequentially formed of a first channel portion (28A), which is open on the rounded front surface (20) of the plate-like body (12) and forms an insertion portion for the pin (26) while assembling the device (10), and a second channel portion (28B), which forms the blind bottom of the channel (28) and retains the pin (26) in the assembled configuration of the device (10).

3. The device (10) according to claim 2, **characterized in that** said second channel portion (28B) has a substantially circular cross-sectional shape and a height or diameter (H2), as measured along a direction perpendicular to said axis (A), that is smaller than the height (H1) of said first channel portion (28A).

4. The device (10) according to claim 3, **characterized in that** said pin (26) has a substantially circular cross-sectional shape, the overall thickness or diameter (D) of said pin (26) being smaller than the height (H1) of said first channel portion (28A) and being substantially equal to the height or diameter (H2) of said second channel portion (28B).

5. The device (10) according to any claims 1 to 4, **characterized in that** each rolling body (22, 24) is inserted in a corresponding housing (30) obtained by milling the plate-like body (12) at the rounded front surface (20), each housing (30) being aligned along said axis (A) in such a way that said channel (28) is formed of a sequence of at last two sections of the channel (28) that are aligned along said axis (A) and spaced away by at least one housing (30) from each other.

6. The device (10) according to claim 5, **characterized in that** each rolling body (22, 24) consists of a cylinder with circular bases, whose height (H3, H4) lies along said axis (A).

7. The device (10) according to claim 6, **characterized in that** said cylinder (22) has a height (H3) substantially greater than its own radius, so that one or more cylinders (22) are provided on the device (10) in the form of rollers which occupy an area preferably greater than 50 % of the rounded front surface (20) of the plate-like body (12).

8. The device (10) according to claim 6, **characterized in that** said cylinder (24) has a height (H4) that is substantially smaller than its own radius, in such a way that a plurality of cylinders (24) are provided on the device (10) in the form of rolling bearings of the ball type, mutually spaced away by portions of the rounded front surface (20) of the plate-like body (12).

9. The device (10) according to any claims 1 to 8, **characterized in that** the single piece of plastic material that forms the plate-like body (12) is manufactured by way of an extrusion process or by way of a molding process.

10. A method for manufacturing a return guiding device (10) according to any of the previous claims, the method comprising the following steps:
- preparing an object consisting of a single piece of plastic material, preferably manufactured by way of an extrusion process or by way of a molding process;
- cutting said one piece of plastic material to size, in such a way as to obtain a plate-like body (12) having a predefined width (L2), a pair of opposed side surfaces (14, 16), an upper surface (18) and a lower surface, opposed to each other, substantially orthogonal to said pair of side surfaces (14, 16), and a rounded front surface (20), which connects said upper surface (18) to said lower surface being obtained on said plate-like body (12);
- by way of a milling operation, obtaining one or more housings (30) on said rounded front surface (20) of the plate-like body (12), wherein each housing (30) is designed for inserting a respective rolling body (22, 24) therein;
- by way of a milling operation, obtaining at least one seat (28) on said rounded front surface (20) of the plate-like body (12), wherein said seat (28) is designed for inserting a respective pin (26) therein and wherein said seat (28) consists of a frontally open substantially U-shaped channel having a width (L1) that is smaller than the predefined width (L2) of said plate-like body (12), in such a way that said channel (28) is laterally closed by said pair of opposed side surfaces (14, 16);
- inserting one or more rolling bodies (22, 24) around the pin (26); and
- snap-fit engaging the pin (26) inside its respective channel (28), in such a way that said pair of opposed side surfaces (14, 16) allows to center both said pin (26) inside its respective channel (28) and said rolling bodies (22, 24) inside their respective housings (30).

11. The method according to claim 10, wherein the step of obtaining said at least one seat (28) comprises in sequence the following sub-steps:
- by way of a milling operation, obtaining a first channel portion (28A), which is open on the rounded front surface (20) of the plate-like body (12) and forms an insertion portion for the pin (26); and
- by way of a milling operation, obtaining a second channel portion (28B), which forms the blind bottom of the channel (28) and holds the pin (26) in the assembled configuration of the device (10).

## Patentansprüche

1. Führungsvorrichtung (10) für ein Ende einer Förderlinie, wobei die Vorrichtung (10) zum Führen und Unterstützen der Rücklaufbewegung eines Förderers konfiguriert ist, die Vorrichtung (10) umfassend mindestens einen plattenartigen Körper (12), der konstruiert ist, um an dem Ende der Förderlinie positioniert zu sein und um mit dem Förderer ausgerichtet zu sein, der plattenartige Körper (12) umfassend:
- ein Paar gegenüberliegende Seitenflächen (14, 16);
- eine obere Fläche (18) und eine untere Fläche, die einander gegenüberliegend und im Wesentlichen orthogonal zu dem Paar Seitenflächen (14, 16) sind;
- eine abgerundete vordere Fläche (20), die die obere Fläche (18) mit der unteren Fläche verbindet, wobei die abgerundete vordere Fläche (20) und mindestens die obere Fläche (18) entsprechende Gleitflächen für den Förderer definieren; und
- mindestens einen Wälzkörper (22, 24), der von der abgerundeten vorderen Fläche (20) hervorsteht und um mindestens einen Stift (26) frei drehbar ist, der in mindestens einen jeweiligen Sitz (28) eingreift, der an der abgerundeten vorderen Fläche (20) erlangt wird,
wobei der Stift (26) und der Sitz (28) entlang ein und derselben Achse (A) ausgerichtet sind, die im Wesentlichen parallel zu der oberen Fläche (18) und der unteren Fläche ist, die einander gegenüberliegend sind, und die im Wesentlichen senkrecht zu dem Paar gegenüberliegender Seitenflächen (14, 16) ist, und wobei die Drehung des mindestens einen Wälzkörpers (22, 24) durch das Gleiten des Förderers auf der abgerundeten vorderen Fläche (20) verursacht wird, wobei die Vorrichtung (10) **dadurch gekennzeichnet ist, dass** der plattenartige Körper (12) aus einem einzelnen Stück aus Kunststoffmaterial besteht, wobei der Sitz (28) durch einen Fräsvorgang an der abgerundeten vorderen Fläche (20) erlangt wird, wobei der Sitz (28) aus einem im Wesentlichen U-förmigen Kanal besteht, der nach vorne offen ist und eine Breite (L1), gemessen in Richtung der Achse (A), aufweist, die kleiner ist als die Gesamtbreite (L2) der oberen Fläche (18), der unteren Fläche und der abgerundeten vorderen Fläche (20), sodass der Kanal (28) seitlich durch das Paar gegenüberliegender Seitenflächen (14, 16) verschlossen ist.

2. Vorrichtung (10) nach Anspruch 1, **dadurch gekennzeichnet, dass** der Kanal (28) aufeinanderfolgend aus einem ersten Kanalabschnitt (28A), der an der abgerundeten vorderen Fläche (20) des plattenförmigen Körpers (12) offen ist und einen Einführungsabschnitt für den Stift (26) während des Zusammenbaus der Vorrichtung (10) bildet, und einem zweiten Kanalabschnitt (28B), der den Blindboden des Kanals (28) bildet und den Stift (26) in der zusammengebauten Konfiguration der Vorrichtung (10) hält, gebildet ist.

3. Vorrichtung (10) nach Anspruch 2, **dadurch gekennzeichnet, dass** der zweite Kanalabschnitt (28B) eine im Wesentlichen kreisförmige Querschnittsform und eine Höhe oder einen Durchmesser (H2), gemessen entlang einer Richtung senkrecht zu der Achse (A), aufweist, die kleiner ist als die Höhe (H1) des ersten Kanalabschnitts (28A).

4. Vorrichtung (10) nach Anspruch 3, **dadurch gekennzeichnet, dass** der Stift (26) eine im Wesentlichen kreisförmige Querschnittsform aufweist, wobei die Gesamtstärke oder der Gesamtdurchmesser (D) des Stifts (26) kleiner ist als die Höhe (H1) des ersten Kanalabschnitts (28A) und im Wesentlichen gleich ist wie die Höhe oder der Durchmesser (H2) des zweiten Kanalabschnitts (28B).

5. Vorrichtung (10) nach den Ansprüchen 1 bis 4, **dadurch gekennzeichnet, dass** jeder Wälzkörper (22, 24) in ein entsprechendes Gehäuse (30) eingesetzt ist, das durch Fräsen des plattenförmigen Körpers (12) an der abgerundeten vorderen Fläche (20) erlangt wird, wobei jedes Gehäuse (30) entlang der Achse (A) auf eine Weise ausgerichtet ist, dass der Kanal (28) aus einer Folge von mindestens zwei Abschnitten des Kanals (28) gebildet ist, die entlang der Achse (A) ausgerichtet und durch mindestens ein Gehäuse (30) voneinander beabstandet sind.

6. Vorrichtung (10) nach Anspruch 5, **dadurch gekennzeichnet, dass** jeder Wälzkörper (22, 24) aus einem Zylinder mit kreisförmigen Grundflächen besteht, deren Höhen (H3, H4) entlang der Achse (A) liegen.

7. Vorrichtung (10) nach Anspruch 6, **dadurch gekennzeichnet, dass** der Zylinder (22) eine Höhe (H3) aufweist, die wesentlich größer ist als sein eigener Radius, sodass ein oder mehrere Zylinder (22) an der Vorrichtung (10) in Form von Walzen bereitgestellt sind, die eine Fläche vorzugsweise größer als 50 % der abgerundeten vorderen Fläche (20) des plattenförmigen Körpers (12) einnehmen.

8. Vorrichtung (10) nach Anspruch 6, **dadurch gekennzeichnet, dass** der Zylinder (24) eine Höhe (H4) aufweist, die wesentlich kleiner ist als sein eigener Radius, auf eine Weise, dass eine Vielzahl von Zylindern (24) an der Vorrichtung (10) in Form von Wälzlagern Typ Kugel bereitgestellt sind, die durch Abschnitte der abgerundeten vorderen Fläche (20) des plattenartigen Körpers (12) voneinander beabstandet sind.

9. Vorrichtung (10) nach den Ansprüchen 1 bis 8, **dadurch gekennzeichnet, dass** das einzelne Stück aus Kunststoffmaterial, das den plattenförmigen Körper (12) bildet, durch ein Extrusionsverfahren oder durch ein Formverfahren hergestellt wird.

10. Verfahren zum Herstellen einer Rücklauf-Führungsvorrichtung (10) nach einem der vorherigen Ansprüche, das Verfahren umfassend die folgenden Schritte:
- Vorbereiten eines Gegenstands, der aus einem einzelnen Stück aus Kunststoffmaterial besteht, vorzugsweise hergestellt durch ein Extrusionsverfahren oder durch ein Formverfahren;
- Zuschneiden des einen Stücks aus Kunststoffmaterial auf eine Größe, auf eine Weise, um einen plattenartigen Körper (12) zu erlangen, der eine vordefinierte Breite (L2), ein Paar gegenüberliegender Seitenflächen (14, 16), eine obere Fläche (18) und eine untere Fläche, die einander gegenüberliegen und im Wesentlichen orthogonal zu dem Paar Seitenflächen (14, 16) sind, und eine abgerundete vordere Fläche (20), die die obere Fläche (18) mit der unteren Fläche, die an dem plattenartigen Körper (12) erlangt wird, verbindet, aufweist;
- durch einen Fräsvorgang, Erlangen von einem oder mehreren Gehäusen (30) an der abgerundeten vorderen Fläche (20) des plattenartigen Körpers (12), wobei jedes Gehäuse (30) zum Einsetzen eines entsprechenden Wälzkörpers (22, 24) darin konstruiert ist;
- durch einen Fräsvorgang, Erlangen von mindestens einem Sitz (28) an der abgerundeten vorderen Fläche (20) des plattenartigen Körpers (12), wobei der Sitz (28) zum Einsetzen eines jeweiligen Stifts (26) darin konstruiert ist, und wobei der Sitz (28) aus einem nach vorne offenen, im Wesentlichen U-förmigen Kanal mit einer Breite (L1) besteht, die kleiner ist als die vordefinierte Breite (L2) des plattenartigen Körpers (12), auf eine Weise, dass der Kanal (28) seitlich durch das Paar gegenüberliegender Seitenflächen (14, 16) verschlossen ist;
- Einsetzen eines oder mehrerer Wälzkörper (22, 24) um den Stift (26); und
- Rast-Eingreifen des Stifts (26) innerhalb seines jeweiligen Kanals (28) auf eine Weise, dass es das Paar gegenüberliegender Seitenflächen (14, 16) ermöglicht, sowohl den Stift (26) innerhalb seines jeweiligen Kanals (28) als auch die Wälzkörper (22, 24) innerhalb ihrer jeweiligen Gehäuse (30) zu zentrieren.

11. Verfahren nach Anspruch 10, wobei der Schritt eines Erlangens des mindestens einen Sitzes (28) in Abfolge die folgenden Unterschritte umfasst:
- durch einen Fräsvorgang, Erlangen eines ersten Kanalabschnitts (28A), der an der abgerundeten vorderen Fläche (20) des plattenförmigen Körpers (12) offen ist und einen Einführungsabschnitt für den Stift (26) bildet; und
- durch einen Fräsvorgang, Erlangen eines zweiten Kanalabschnitts (28B), der den Blindboden des Kanals (28) bildet und den Stift (26) in der zusammengebauten Konfiguration der Vorrichtung (10) hält.

## Revendications

1. Dispositif de guidage (10) pour une extrémité d'une ligne de convoyage, le dispositif (10) étant configuré pour guider et supporter le mouvement de retour d'un convoyeur, le dispositif (10) comprenant au moins un corps en forme de plaque (12) conçu pour être positionné à ladite extrémité de la ligne de convoyage et pour être aligné avec le convoyeur, ledit corps en forme de plaque (12) comprenant :
- une paire de surfaces latérales (14, 16) opposées ;
- une surface supérieure (18) et une surface inférieure opposées l'une à l'autre, sensiblement orthogonales à ladite paire de surfaces latérales (14, 16) ;
- une surface frontale arrondie (20), qui raccorde ladite surface supérieure (18) à ladite surface inférieure, ladite surface frontale arrondie (20) et au moins ladite surface supérieure (18) définissant des surfaces de coulissement respectives pour ledit convoyeur ; et
- au moins un corps de roulement (22, 24), saillant depuis la surface frontale arrondie (20) et librement rotatif autour d'au moins une goupille (26) insérée dans au moins un siège (28) respectif obtenu sur ladite surface frontale arrondie (20),
dans lequel ladite goupille (26) et ledit siège (28) sont orientés le long d'un même axe (A) sensiblement parallèle à ladite surface supérieure (18) et à ladite surface inférieure, opposées l'une à l'autre, et sensiblement perpendiculaire à ladite paire de surfaces latérales opposées (14, 16), et dans lequel la rotation de ladite au moins un corps de roulement (22, 24) est causée par le coulissement dudit convoyeur sur ladite surface frontale arrondie (20), le dispositif (10) étant **caractérisé en ce que** ledit corps en forme de plaque (12) est composé d'une seule pièce de matière plastique, dans lequel ledit siège (28) est obtenu par une opération de fraisage sur ladite surface frontale arrondie (20), ledit siège (28) étant composé d'un canal sensiblement en U ouvert frontalement et ayant une largeur (L1), mesurée dans la direction dudit axe (A), inférieure à la largeur totale (L2) de ladite surface supérieure (18), ladite surface inférieure et ladite surface frontale arrondie (20), de telle sorte que ledit canal (28) est fermé latéralement par ladite paire de surfaces latérales opposées (14, 16).

2. Dispositif (10) selon la revendication 1, **caractérisé en ce que** ledit canal (28) est formé séquentiellement d'une première partie de canal (28A), ouverte sur la surface frontale arrondie (20) du corps en forme de plaque (12) et forme une partie d'insertion pour la goupille (26) pendant le montage du dispositif (10), et une deuxième partie de canal (28B), qui forme le fond plein du canal (28) et retient la goupille (26) dans la configuration montée du dispositif (10).

3. Dispositif (10) selon la revendication 2, **caractérisé en ce que** ladite deuxième partie de canal (28B) a une forme en section transversale sensiblement circulaire et une hauteur ou un diamètre (H2), mesuré(e) le long d'une direction perpendiculaire audit axe (A), inférieur(e) à la hauteur (H1) de ladite première partie de canal (28A).

4. Dispositif (10) selon la revendication 3, **caractérisé en ce que** ladite goupille (26) a une forme en section transversale sensiblement circulaire, l'épaisseur ou le diamètre (D) total de ladite goupille (26) étant inférieur à la hauteur (H1) de ladite première partie de canal (28A) et étant sensiblement égal à la hauteur ou au diamètre (H2) de ladite deuxième partie de canal (28B).

5. Dispositif (10) selon l'une quelconque des revendications 1 à 4, **caractérisé en ce que** chaque corps de roulement (22, 24) est inséré dans un logement (30) correspondant obtenu en fraisant le corps en forme de plaque (12) sur la surface frontale arrondie (20), chaque logement (30) étant aligné le long dudit axe (A) de telle manière que ledit canal (28) soit formé d'une séquence d'au moins deux sections du canal (28) alignées le long dudit axe (A) et espacées d'au moins un logement (30) l'une de l'autre.

6. Dispositif (10) selon la revendication 5, **caractérisé en ce que** chaque corps de roulement (22, 24) est composé d'un cylindre avec des bases circulaires, dont la hauteur (H3, H4) repose le long dudit axe (A).

7. Dispositif (10) selon la revendication 6, **caractérisé en ce que** ledit cylindre (22) a une hauteur (H3) sensiblement supérieure à son propre rayon, de telle sorte qu'au moins un cylindre (22) soit disposé sur le dispositif (10) sous forme de rouleaux qui occupent une surface de préférence supérieure à 50 % de la surface frontale arrondie (20) du corps en forme de plaque (12).

8. Dispositif (10) selon la revendication 6, **caractérisé en ce que** ledit cylindre (24) a une hauteur (H4) sensiblement inférieure à son propre rayon, de telle manière qu'une pluralité de cylindres (24) soient agencés sur le dispositif (10) sous forme de paliers de roulement du type à billes, mutuellement espacés par des parties de la surface frontale arrondie (20) du corps en forme de plaque (12).

9. Dispositif (10) selon l'une des revendications 1 à 8, **caractérisé en ce que** la pièce unique de matière plastique qui forme le corps en forme de plaque (12) est fabriquée au moyen d'un processus d'extrusion ou au moyen d'un procédé de moulage.

10. Procédé de fabrication d'un dispositif de guidage à retour (10) selon l'une quelconque des revendications précédentes, ledit procédé comprenant les étapes suivantes :
- préparation d'un objet composé d'une seule pièce de matière plastique, fabriquée de préférence grâce à un procédé d'extrusion ou un procédé de moulage ;
- découpe de ladite seule pièce de matière plastique à la dimension, de façon à obtenir un corps en forme de plaque (12) ayant une largeur (L2) prédéfinie, une paire de surfaces latérales opposées (14, 16), une surface supérieure (18) et une surface inférieure, opposées l'une à l'autre, sensiblement orthogonales à ladite paire de surfaces latérales (14, 16), et une surface frontale arrondie (20), qui raccorde ladite surface supérieure (18) à ladite surface inférieure étant obtenue sur ledit corps en forme de plaque (12) ;
- grâce à une opération de fraisage, obtenir au moins un logement (30) sur ladite surface frontale arrondie (20) du corps en forme de plaque (12), dans lequel chaque logement (30) est conçu pour y insérer un corps de roulement (22, 24) respectif ;
- grâce à une opération de fraisage, obtenir au moins un siège (28) sur ladite surface frontale arrondie (20) du corps en forme de plaque (12), dans lequel ledit siège (28) est conçu pour y insérer une goupille (26) respective et dans lequel ledit siège (28) est composé d'un canal sensiblement en U ouvert frontalement ayant une largeur (L1) inférieure à la largeur (L2) prédéfinie dudit corps en forme de plaque (12), de telle sorte que ledit canal (28) soit fermé latéralement par ladite paire de surfaces latérales opposées (14, 16);
- insertion d'au moins un corps de roulement (22, 24) autour de la goupille (26) ; et
- insertion par encliquetage de la goupille (26) à l'intérieur de son canal (28) respectif, de telle manière que ladite paire de surfaces latérales opposées (14, 16) permette de centrer aussi bien ladite goupille (26) à l'intérieur de son canal (28) respectif que lesdits corps de roulement (22, 24) à l'intérieur de leurs logements (30) respectifs.

11. Procédé selon la revendication 10, dans lequel l'étape d'obtention dudit au moins un siège (28) comprend en séquence les étapes secondaires suivantes :
- grâce à une opération de fraisage, obtenir une première partie de canal (28A), ouverte sur la surface frontale arrondie (20) du corps en forme de plaque (12) et formant une partie d'insertion pour la goupille (26) ; et
- grâce à une opération de fraisage, obtenir une deuxième partie de canal (28B), formant le fond plein du canal (28) et maintenant la goupille (26) dans la configuration assemblée du dispositif (10).
